(19) Europäisches Patentamt
European Patent Office
Office européen des brevets

(11) **EP 2 812 407 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(21) Anmeldenummer: **13701075.7**

(22) Anmeldetag: **23.01.2013**

(51) Int Cl.:
*C09J 7/38* (2018.01)          *C09J 133/08* (2006.01)
*C09J 133/10* (2006.01)

(86) Internationale Anmeldenummer:
**PCT/EP2013/051188**

(87) Internationale Veröffentlichungsnummer:
**WO 2013/117428 (15.08.2013 Gazette 2013/33)**

(54) **ALS TACKIFIER FÜR KLEBSTOFFE ANWENDBARE WÄSSRIGE POLYMERDISPERSION, HERSTELLBAR DURCH EMULSIONSPOLYMERISATION AUF BASIS VON C1- BIS C20 ALKYL(METH)ACRYLATEN**

AQUEOUS POLYMER DISPERSION THAT CAN BE USED AS A TACKIFIER FOR ADHESIVES AND CAN BE PRODUCED BY EMULSION POLYMERISATION BASED ON C1 TO C20 ALKYL (METH)ACRYLATES

DISPERSION POLYMÈRE AQUEUSE POUVANT S'UTILISER COMME AGENT POISSEUX POUR ADHÉSIFS, OBTENUE PAR POLYMÉRISATION EN ÉMULSION À BASE D'ACRYL(MÉTH)ACRYLATES C1 À C20

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2012 EP 12153979**

(43) Veröffentlichungstag der Anmeldung:
**17.12.2014 Patentblatt 2014/51**

(73) Patentinhaber: **BASF SE**
**67056 Ludwigshafen am Rhein (DE)**

(72) Erfinder:
• **GERST, Matthias**
**67487 Maikammer (DE)**
• **GROß, Michael**
**68161 Mannheim (DE)**

(74) Vertreter: **BASF IP Association**
**BASF SE**
**G-FLP-C006**
**67056 Ludwigshafen (DE)**

(56) Entgegenhaltungen:
EP-A2- 1 829 947          JP-A- S63 241 084
US-A- 5 196 504          US-A- 5 461 103
US-A- 5 800 873          US-A- 6 124 417
US-A1- 2002 055 587

EP 2 812 407 B1

## Beschreibung

Die Erfindung betrifft eine wässrige Klebstoffdispersion, enthaltend ein in Wasser dispergiertes Klebstoffpolymer und mindestens ein in Wasser dispergiertes Tackifier-Polymerisat mit niedrigem Molekulargewicht und einer bestimmten Glasübergangstemperatur, herstellbar durch Emulsionspolymerisation in Gegenwart mindestens eines Molekulargewichtsreglers aus einem Monomergemisch enthaltend C1- bis C20 Alkyl(meth)acrylate, Säuremonomere und optional Vinylaromaten sowie weitere Monomere. Die Erfindung betrifft auch Verwendungen der Dispersion, z.B. zur Herstellung von Klebeetiketten, Klebefolien oder Klebebändern oder für Fußbodenklebstoffe.

Bei Haftklebstoffen ist sowohl eine gute Haftung zum Substrat (Adhäsion) gewünscht als auch eine ausreichende innere Festigkeit in der Klebstoffschicht (Kohäsion). Bei Adhäsion und Kohäsion handelt es sich um entgegengesetzte anwendungstechnische Eigenschaften. Maßnahmen, die eine Verbesserung der Adhäsion bewirken, führen im Allgemeinen gleichzeitig zu einer Verschlechterung der Kohäsion und umgekehrt. Viele Haftklebstoffpolymere haben zwar eine ausreichend hohe Kohäsion nicht aber eine ausreichende Adhäsion. Durch die Zugabe von sogenannten Tackifiern lässt sich die Adhäsion von Klebstoffzusammensetzungen deutlich erhöhen. Tackifier sind polymere Zusatzstoffe für Klebstoffpolymere oder allgemein für Elastomere, die deren Autoadhäsion (Tack, Eigenklebrigkeit, Selbsthaftung) erhöhen, sodass sie nach kurzem leichten Andruck fest auf Oberflächen haften. Üblicherweise eingesetzte Tackifier sind u.a. solche auf Basis von Naturharzen, Terpen-Oligomere, Cumaron-Indenharze, aliphatisch- petrochemische Harze und modifizierte Phenol-Harze. Bei Harzen aus natürlichen Quellen können die naturgemäß schwankende Verfügbarkeit und Preis problematisch sein. Bei synthetischen Harzen, die als Tackifier für wässrige Haftklebstoffpolymerdispersionen verwendbar sein sollen, ist eine gute molekulare Mischbarkeit einer Teil- bzw. der Gesamtmenge im getrockneten Klebstofffilm ebenso wichtig wie eine gute Verträglichkeit mit wässrigen Polymerdispersionen. Eine gute Mischbarkeit in Polymerfilmen wird durch ein möglichst geringes Molekulargewicht begünstigt. Bei synthetischen Tackifierpolymeren oder -oligomeren ist problematisch, dass zur Erzielung von geringen Molekulargewichten bei der Herstellung relativ hohe Mengen an Molekulargewichtsreglern eingesetzt werden müssen. Dies kann zu einem relativ hohem Gehalt an nicht polymerisierten Restmonomeren führen, was einerseits hinsichtlich Produktsicherheitsaspekten häufig unerwünscht ist und andererseits ebenso wie ein zu geringes Molekulargewicht der Polymerisate eine stark weichmachende Wirkung auf die Klebstoffpolymere haben kann, was zu einer unerwünscht starken Beeinträchtigung der Kohäsion führen kann. Eine Verwendung von niedrigmolekularen Polyacrylaten als Tackifier für Klebstoffformulierungen wird z.B. erwähnt in WO 2005/047342. Ein derartiges Handelsprodukt ist z.B. Acronal® A107 (ältere Bezeichnung: Acronal® 7 D). Damit hergestellte Klebstoffformulierungen haben eine gute Klebrigkeit und Adhäsion. Für manche Anwendungen sind sie aber zu "weich", d.h. die Kohäsion ist nicht ausreichend.

US 2002/055587 A1 beschreibt niedrigmolekulare polymere Additive für Klebstoffzusammensetzungen. Bei den Additiven handelt es sich um Tackifier, wenn die Glasübergangstemperatur mindestens 0°C oder höher ist. Wenn die Glasübergangstemperatur kleiner als 0°C ist, handelt es sich bei den Additiven um Weichmacher.

EP 1 829 947 beschreibt Haftklebstofffolien mit einer Haftklebstoffschicht, welche hergestellt ist aus einer Zusammensetzung enthaltend eine Kombination aus einem wasser-dispergierbaren, hochmolekularen Acrylcopolymer (Mw 400.000 bis 900.000) und einer wasser-dispergierbaren niedrigmolekularen Acrylverbindung (Mw 5,000 bis 250,000).

JP S63-241084 A beschreibt Haftklebstoffemulsionen enthaltend eine Kombination von (A) einem (Meth)acrylsäureester-Copolymer mit einer Glasübergangstemperatur von kleiner oder gleich -55 °C und einem Molekulargewicht Mn von 110.000 bis 500.000, (B) einem (Meth)acrylsäureester-Copolymer mit einer Glasübergangstemperatur von größer oder gleich -55 °C und einem Molekulargewicht Mn von 10.000 bis 100.000 und (C) einem thermoplastischen Tackifier.

Aufgabe der vorliegenden Erfindung war es, als Tackifier für wässrige Haftklebstoffdispersionen geeignete Stoffe zur Verfügung zu stellen, mit denen sich die Klebeeigenschaften von Haftklebstoffen, insbesondere für selbstklebende Artikel wie Klebeetiketten, Klebefolien oder Klebebänder sowie Fußbodenklebstoffe optimieren lassen. Insbesondere sollte neben einer guten Adhäsion gleichzeitig eine möglichst gute Kohäsion erreicht werden. Demgemäß wurden die unten näher beschriebenen wässrigen Polymerdispersionen auf Basis von bestimmten, synthetischen, niedermolekularen Acrylatpolymeren gefunden.

Gegenstand der Erfindung ist eine wässrige Klebstoffdispersion, enthaltend mindestens ein in Wasser dispergiertes Klebstoffpolymer und mindestens ein in Wasser dispergiertes Tackifier-Polymer, wobei das Tackifier-Polymer ein Polymerisat ist mit einem gewichtsmittlerem Molekulargewicht von weniger als 50000 und einer Glasübergangstemperatur von größer oder gleich - 40 °C bis kleiner oder gleich 0 °C, vorzugsweise von größer oder gleich -35°C, bis kleiner oder gleich 0 °C, herstellbar durch Emulsionspolymerisation in Gegenwart mindestens eines Molekulargewichtsreglers und herstellbar aus einem Monomergemisch enthaltend

(a) mindestens 40 Gew.% mindestens eines C1- bis C20-Alkyl(meth)acrylats,
(b) 0 bis 30 Gew.% mindestens eines Vinylaromaten,

(c) mindestens 0,1 und bis 7 Gew.% mindestens eines Säuremonomers,

(d) 0 bis 50 Gew.% an weiteren Monomeren,

wobei die Angaben der Monomermengen jeweils auf die Summe aller Monomere bezogen sind, wobei die für eine Polymerisation ohne Molekulargewichtsregler berechnete, theoretische Glasübergangstemperatur des Tackifier-Polymers größer als -25°C ist und wobei der mindestens eine Molekulargewichtsregler eine organische Verbindung ist, die Schwefel in gebundener Form enthält und der Molekulargewichtsregler in einer Menge von mindestens 1 Gewichtsteil auf 100 Gewichtsteile Monomere eingesetzt wird. Die erfindungsgemäße Dispersion enthält als wesentlichen Bestandteil ein Polymerisat, welches durch Emulsionspolymerisation herstellbar ist; bei dem dispergierten Polymer handelt es sich dann um ein Emulsionspolymerisat. Die Bezeichnung "Polymerisat" umfasst im Folgenden sowohl (niedrigmolekulare) Polymere als auch Oligomere.

Die Polymerisate lassen sich durch herkömmliche Emulsionspolymerisation unter Verwendung von ungewöhnlich hohen Mengen an Reglern herstellen. Die so erhaltenen Tackifierdispersionen lassen sich dann als Blendkomponente mit Klebstoffpolymeren zu Haftklebstoffdispersionen abmischen. Anstatt der Verwendung als Blendkomponente können die Tackifierdispersionen auch durch eine Stufenfahrweise in-situ nach der Emulsionspolymerisation einer Haftklebstoffdispersion in Gegenwart eines Klebstoffpolymers hergestellt werden.

Im Folgenden wird die Bezeichnung (Meth)acrylat und ähnliche Bezeichnungen als abkürzende Schreibweise verwendet für "Acrylat oder Methacrylat".

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Eine Haftklebstoffdispersion ist eine Zusammensetzung, welche ein in Wasser oder in wässrigem Medium dispergiertes Polymer mit haftklebrigen Eigenschaften enthält.

Ein Klebstoffpolymer im Sinne der Erfindung ist ein Polymer mit einer Glasübergangstemperatur im Bereich von -60°C bis -20 °C.

Die Glasübergangstemperatur von Polymeren lässt sich durch Differential Scanning Calorimetrie (ASTM 3418/82, 20 K/min, sog. "midpoint temperature") bestimmen.

Ein Tackifier ist ein polymerer oder oligomerer Zusatzstoffe für Klebstoffpolymere oder allgemein für Elastomere, der deren Autoadhäsion (Tack, Eigenklebrigkeit, Selbsthaftung) erhöht, sodass sie nach kurzem leichten Andruck fest auf Oberflächen haften.

Das als Tackifier geeignete Polymerisat ist zu mindestens 40 Gew.%, insbesondere von 60 bis 99,9 Gew.% oder von 60 bis 99,7 Gew.% oder von 70 bis 98 Gew.% aus mindestens einem C1- bis C20 Alkyl(meth)acrylat aufgebaut. Bevorzugt sind C1- bis C10-Alkylacrylate und C1- bis C10-Alkylmethacrylate. Geeignete Monomere sind z.B. Methylmethacrylat, Methylacrylat, n-Butylacrylat, Ethylacrylat, Ethylmethacrylat, n-Hexylacrylat, Octylacrylat und 2-Ethylhexylacrylat. Insbesondere sind auch Mischungen der (Meth)acrylsäurealkylester geeignet. Ganz besonders bevorzugt sind 2-Ethylhexylacrylat, n-Butylacrylat und Methylmethacrylat.

Das als Tackifier geeignete Polymerisat kann optional aus Vinylaromaten aufgebaut sein. Die Vinylaromatmonomere (b) können in Mengen von 0 bis 30 Gew.%, insbesondere von 0,5 bis 25 Gew.% oder von 2 bis 20 Gew.% bezogen auf die Gesamtmenge an Monomeren eingesetzt werden. Bevorzugt sind Vinylaromaten mit bis zu 20 C-Atomen. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht.

Das als Tackifier geeignete Polymerisat ist zu mindestens 0,1 Gew.% und bis 7 Gew.%, besonders bevorzugt 0,2 bis 7 Gew.%, ganz besonders bevorzugt 0,5 bis 7 Gew. %, bezogen auf die Gesamtmenge an Monomeren, aus Säuremonomeren gebildet. Säuremonomere sind ethylenisch ungesättigte, radikalisch polymerisierbare Monomere, welche mindestens eine Säuregruppe aufweisen. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Die Säuremonomer sind vorzugsweise ausgewählt aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat und Sulfopropylmethacrylat und Mischungen dieser Monomere. Besonders bevorzugt sind Acrylsäure und Methacrylsäure und deren Gemisch.

Das als Tackifier geeignete Polymerisat kann optional aus weiteren, von den monomeren (a) bis (c) verschiedenen Monomeren (d) aufgebaut sein. Die weiteren Monomere (d) werden vorzugsweise in Mengen von 0 bis 50 Gew.%, insbesondere von 0,1 bis 40 Gew.%, oder von 1 bis 30 Gew.%, bezogen auf die Gesamtmenge an Monomeren eingesetzt. Die weiteren Monomere (d) können ausgewählt sein aus C1 bis C20 Hydroxyalkyl(meth)acrylaten, Vinylestern von bis zu 20 C-Atome enthaltenden Carbonsäuren, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomere. Vinylester von Carbonsäuren mit 1 bis 20 C-Atomen sind z. B. Vinyllaurat, Vinylstearat, Vinylpropionat, Versaticsäurevinylester und vorzugsweise Vinylacetat. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Isopren und Chloropren genannt. Als weitere Monomere besonders bevorzugt sind Methylacrylat, Methylmethacrylat, Ethylacrylat, C1-C10-Hydroxyalkyl(meth)acrylate und (Meth)acrylamid sowie Mischungen dieser Monomere.

In einer Ausführungsform der Erfindung ist das Polymerisat herstellbar aus einem Monomergemisch, enthaltend

(a) 60 bis 99,7 Gew.% mindestens eines C1- bis C10 Alkyl(meth)acrylats,
(b) 0 bis 30 Gew.% Styrol
(c) 0,2 bis 7 Gew.% mindestens eines Säuremonomers, ausgewählt aus Acrylsäure und Methacrylsäure,
(d) 0,1 bis 30 Gew.% an weiteren Monomeren, ausgewählt aus C1- bis C10-Hydroxyalkyl-(meth)acrylaten und Vinylacetat,

wobei die Angaben der Monomermengen jeweils auf die Summe aller Monomere bezogen sind.

Das Polymerisat wird in Gegenwart mindestens eines Molekulargewichtsreglers hergestellt, um das erfindungsgemäß niedrige Molekulargewicht zu erreichen. Die Menge an eingesetztem Molekulargewichtsregler ist dabei so eingestellt, dass die gewichtsmittlere Molmasse kleiner 50000, vorzugsweise von 1500 bis 45000 oder von 2000 bis 20000 beträgt. Typische Mengen an Molekulargewichtsregler sind mindestens 1 Gewichtsteil, vorzugsweise mehr als 1 Gewichtsteil, z.B. 2 bis 30 Gewichtsteile auf 100 Gewichtsteile Monomere.

Bei den Molekulargewichtsreglern handelt es sich im Allgemeinen um niedermolekulare Verbindungen mit einem Molgewicht kleiner 2000, insbesondere kleiner 1000 g/mol. Die Molekulargewichtsregler sind organische Verbindungen, die Schwefel in gebundener Form enthalten, insbesondere Verbindungen mit einer Thiol- oder Sulfidgruppe wie Alkylmercaptane, Thiocarbonsäuren, Thiocarbonsäureester, Mercaptoalkanole, Mercaptoalkyltrialkoxysilane, Thioglykole, Dialkylsulfide, Diarylsulfide, Dialkyldisulfide oder Thioharnstoff. Beispiele sind tert.-Butylmercap-tan, tert.-Dodecylmercaptan, Thioglycolsäureethylhexylylester, Mercaptoethanol, Mercaptopropyltrimethoxysilan, Thiodiglykol, Ethylthioethanol, Di-n-butylsulfid, Di-n-octylsulfid, Diphenylsulfid, Diisopropyldisulfid, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff. Vorzugsweise ist der Molekulargewichtsregler ausgewählt aus der Gruppe bestehend aus tert.-Dodecylmercaptan, n-Dodecylmercaptan und (2-Ethylhexyl)-thioglykolat. Besonders bevorzugt ist (2-Ethylhexyl)-thioglykolat (EHTG).

Art und Mengen der Monomere und des mindestens einen Molekulargewichtsreglers sind so eingestellt, dass die Glasübergangstemperatur (Tg) des Polymerisats größer oder gleich -40 °C, vorzugsweise größer oder gleich -35°C, bis kleiner oder gleich 0 °C beträgt. Hierbei handelt es sich um die tatsächlich messbare Tg, welche von der mit der sogenannten Fox-Gleichung berechenbaren theoretischen Tg abweichen kann. Die für eine Polymerisation ohne Molekulargewichtsregler mit der Fox-Gleichung berechnete, theoretische Tg des Polymerisats ist größer als -25°C. Bevorzugt ist außerdem, dass die mit der Fox-Gleichung berechnete, theoretische Tg größer ist als die tatsächlich gemessene Tg des Polymerisats. Besonders bevorzugt ist die Differenz aus theoretischer Tg minus tatsächlicher Tg größer als 3°C, insbesondere größer als 5°C. Die Glasübergangstemperatur lässt sich bestimmen durch Differential Scanning Calorimetrie (z.B. ASTM 3418/82, 20 K/min, sog. "midpoint temperature").

Die theoretische Tg lässt sich mittels der Fox-Gleichung berechnen. Dabei ist mit der theoretischen Glasübergangstemperatur Tg, der Grenzwert der Glasübergangstemperatur gemeint, dem diese mit zunehmendem Molekulargewicht zustrebt. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots x^n/T_g^n,$$

wobei $x^1$, $x^2$, $\ldots x^n$ die Massenbrüche der Monomeren 1, 2, $\ldots$ n und $T_g^1$, $T_g^2$, $\ldots T_g^n$ die Glasübergangstemperaturen der jeweils nur aus einem der Monomeren 1, 2, $\ldots$ n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989).

Die Herstellung der Polymerisate kann durch Emulsionspolymerisation erfolgen, es handelt sich dann um Emulsionspolymerisate, wobei die oben genannten ethylenisch ungesättigten, radikalisch polymerisierbaren Monomere durch radikalisch initiierte Emulsionspolymerisation in Wasser polymerisiert werden. Um die Dispergierung der Monomeren in dem wässrigen Medium zu unterstützen, kann man die üblicherweise als Dispergiermittel eingesetzten Schutzkolloide und/oder Emulgatoren verwenden.

Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Emulgatoren kommen sowohl anionische, kationische als auch nichtionische grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol , insbesondere von 5000 bis 50000 g/mol. Vorzugsweise werden anionische und nichtionische Emulgatoren als grenz-flächenaktive Substanzen verwendet. Geeignete Emulgatoren sind beispielsweise ethoxylierte $C_8$-bis $C_{36}$-Fettalkohole mit einem Ethoxylierungsgrad von 3 bis 50, ethoxylierte Mono-, Di- und Tri- $C_4$- bis $C_{12}$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationaktive Emulgatoren sind z.B. Verbindungen mit mindestens einer Amino- oder Ammoniumgruppe und mindestens einer C8-C22-Alkylgruppe. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES 77, Lutensol AT 18, Steinapol VSL, Emulphor NPS 25. Die grenzflächenaktive Substanz wird üblicherweise in Mengen von 0,1 bis 10 Gew.-%, bezogen auf die zu polymerisierenden Monomeren verwendet.

Bei der Emulsionspolymerisation werden üblicherweise wasserlösliche Initiatoren für die radikalische Polymerisation der Monomere verwendet. Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert.-Butylhydroperoxid. Geeignet sind auch sogenannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol, Ethanol oder Tetrahydrofuran bestehen. Vorzugsweise wird nur Wasser verwendet. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt. Auch der Molekulargewichtsregler kann zum Teil vorgelegt werden, ganz oder teilweise während der Polymerisation oder gegen Ende der Polymerisation zugegeben werden.

Die Monomeren werden vorzugsweise zumindest teilweise während der Polymerisation kontinuierlich zugegeben. Zum Teil können Monomere auch im Polymerisationsgefäß vor Beginn der Polymerisation vorgelegt werden. Vorzugsweise werden maximal 30 Gew. % der Gesamtmenge der Monomeren, besonders bevorzugt maximal 20 Gew. %, ganz besonders bevorzugt maximal 10 Gew. % der Monomeren im Polymerisationsgefäß vorgelegt. Die übrigen Monomeren, d.h. vorzugsweise mindestens 70 Gew. %, besonders bevorzugt mindestens 80 Gew. %, ganz besonders bevorzugt mindestens 90 Gew. % werden während der Polymerisation kontinuierlich zugegeben. In einer besonderen Ausführungsform werden keine Monomeren vorgelegt, d.h. die Gesamtmenge der Monomere wird während der Polymerisation zugefahren. Die einzelnen Komponenten können dem Reaktor beim Zulaufverfahren von oben, in der Seite oder von unten durch den Reaktorboden zugegeben werden.

Zur Entfernung der Restmonomeren kann auch nach dem Ende der eigentlichen Emulsionspolymerisation, d. h. nach einem Umsatz aller Monomeren weiterer Initiator zugesetzt werden (chemische Desodorierung). Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Das so hergestellte Polymerisat wird vorzugsweise in Form seiner wässrigen Dispersion verwendet.

Die Größenverteilung der Dispersionsteilchen kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 300 nm. Besonders bevorzugt liegt die mittlere Teilchengröße zwischen 140 und 300 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 4,5, insbesondere auf einen pH-Wert zwischen 5 und 8 eingestellt.

Gegenstand der Erfindung ist auch eine Klebstoffdispersion, d.h. eine wässrige Dispersion, welche dadurch gekennzeichnet ist, dass sie zusätzlich zu dem oben beschriebenen, niedermolekularen Polymerisat mindestens ein dispergiertes Klebstoffpolymer enthält. Das Klebstoffpolymer hat ein größeres gewichtsmittleres Molekulargewicht als das niedrigmolekulare Polymerisat. Ein Klebstoffpolymer im Sinne der Erfindung ist ein Polymer mit einer Glasübergangstemperatur im Bereich von -60°C bis -20 °C. Vorzugsweise ist die Glasübergangstemperatur des Polymerisats größer als die Glasübergangstemperatur des Klebstoffpolymers, insbesondere um mindestens 1 °C oder um mindestens 2 °C größer.

In der Klebstoffdispersion ist das Klebstoffpolymer in Mengen vorzugsweise von 60 bis 95 Gew.%, insbesondere von 70 bis 90 Gew.% und das niedrigmolekulare Polymerisat in Mengen von 5 bis 40 Gew.%, insbesondere von 10 bis 30 Gew.% enthalten, wobei die Mengenangaben jeweils auf Feststoffgehalt bezogen sind.

Bei den Klebstoffpolymeren kann es sich um durch radikalische Polymerisation von ethylenisch ungesättigten Verbindungen (Monomere) erhältliche Polymere oder um durch Polykondensation erhältliche Polymere wie z.B. Polyurethane handeln. Das Klebstoffpolymer besteht vorzugsweise zu mindestens 40 Gew.% oder zu mindestens 60 Gew.%, oder zu mindestens 80 Gew.%, besonders bevorzugt zu mindestens 90 Gew.% aus so genannten Hauptmonomeren. Die Hauptmonomeren sind vorzugsweise ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren. Geeignete Klebstoffpolymere sind insbesondere Poly(meth)acrylate, Ethylen/Vinylacetat Copolymer, Polyurethane, Polyamidharze, gesättigte Polyester, Polyolefine, Styrol/Butadien Blockcopolymere, Styrol/Isopren Blockcopolymere, Polyimide, PVC und Polyvinylpyrrolidon.

Bevorzugte Klebstoffpolymere sind (Meth)acrylatpolymere und Vinylacetat-Polymere. Die (Meth)acrylatpolymere sind aus mindestens einem (Meth)acrylatmonomer gebildet, welches mit weiteren Monomeren copolymerisiert sein kann. Die Vinylacetat-Polymere sind aus mindestens einem Vinylacetatmonomer gebildet, welches mit weiteren Monomeren copolymerisiert sein kann, z.B. Ethylen/Vinylacetat Copolymer. Geeignete Monomere sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind z.B. Butadien, Isopren und Chloropren. Kohlenwasserstoffe mit 2 bis 4 C-Atomen sind z.B. Ethylen, Propylen oder Buten. Als Hauptmonomere bevorzugt sind $C_1$- bis $C_{10}$-Alkylacrylate und $C_1$- bis $C_{10}$-Alkylmethacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat und 2-Ethylhexylacrylat, Styrol sowie Mischungen dieser Monomere.

Neben den Hauptmonomeren kann das Klebstoffpolymer weitere Monomere enthalten, z.B. Säuremonomere, Hydroxylgruppen enthaltende Monomere, insbesondere $C_1$-$C_{10}$-Hydroxyalkyl-(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. Als weitere Monomere seien auch vernetzende Monomere genannt. Die weiteren Monomere werden im Allgemeinen in untergeordneten Mengen eingesetzt, ihr Anteil liegt insgesamt vorzugsweise unter 10 Gew. %, insbesondere unter 5 Gew. %.

Bevorzugte Klebstoffpolymere der Klebstoffzusammensetzung sind Acrylat- oder Methacrylatpolymere, welche außer aus Acrylsäureester- bzw. Methacrylsäureestermonomeren aus Monomeren mit Säuregruppen gebildet sind. Die Monomere mit Säuregruppen sind vorzugsweise zu mindestens 0,1 Gew.%, z.B. 0,1 bis 15 Gew. %, vorzugsweise in Mengen von 0,1 bis 5, besonders bevorzugt 0,2 bis 4, ganz besonders bevorzugt 0,5 bis 3 Gew. %, bezogen auf die Gesamtmenge an Monomeren enthalten. Monomere mit Säuregruppen sind z.B. Monomere mit Carbonsäure-, Sulfonsäure- oder Phosphonsäuregruppen. Bevorzugt sind Carbonsäuregruppen. Genannt seien z.B. Acrylsäure, Methacrylsäure, Itaconsäure, Maleinsäure oder Fumarsäure. Die Säuregruppen können in Form ihrer Salze vorliegen.

Die Herstellung der radikalisch polymerisierten Klebstoffpolymere kann analog zur Herstellung der niedrigmolekularen Polymerisate durch Emulsionspolymerisation erfolgen. Zur Herstellung der Klebstoffdispersion kann eine kein Klebstoffpolymer enthaltende aber das niedrigmolekulare Polymerisat enthaltende wässrige Dispersion mit einer ein Klebstoffpolymer enthaltenden wässrigen Dispersion gemischt werden. In einer bevorzugten Ausführungsform der Erfindung wird das oben beschriebene niedrigmolekulare Polymerisat in-situ in Gegenwart des mindestens einen, in Wasser dispergierten Klebstoffpolymers hergestellt.

Die erfindungsgemäße Klebstoffdispersion ist vorzugsweise eine Haftklebstoffdispersion und kann Additive enthalten. Die Additive sind z.B. ausgewählt aus Füllstoffen, Farbstoffen, Verlaufshilfsmitteln, Verdickern, vorzugsweise Assoziativverdicker, Entschäumer, Weichmachern, Pigmenten, Netzmitteln, UV-Schutzmitteln und optional weiteren Tackifiern. Vorzugsweise sind aber keine weiteren Tackifier enthalten. Für eine bessere Benetzung von Oberflächen können die Klebstoffdispersionen insbesondere Benetzungshilfsmittel, z.B. Fettalkoholethoxylate, Alkylphenolethoxylate, Sulfobernsteinsäureester, Nonylphenolethoxylate, Polyoxyethylene/- propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer (fest).

Gegenstand der Erfindung ist auch die Verwendung der wässrigen Dispersion zur Herstellung von Klebeetiketten, Klebefolien oder Klebebändern, z.B. Klebebändern zur Fixierung von Bauteilen, insbesondere im Automobilbau, für Elektronikartikel oder bei Bauanwendungen sowie für Fußbodenklebstoffe.

Gegenstand der Erfindung sind auch selbstklebende Artikel, erhältlich durch Beschichten eines Trägermaterials mit einer erfindungsgemäßen, mindestens ein Klebstoffpolymer enthaltenden wässrigen Dispersion.

Erfindungsgemäße Klebstoffdispersionen können zur Herstellung von Klebstoffartikeln, bzw. selbstklebend ausgerüsteten Artikeln verwendet werden. Bei dem Klebstoffartikel kann es sich um ein Etikett handeln. Ein bevorzugtes Etikett ist ein selbstklebendes Papieretikett oder Folienetikett, wobei der Klebstoff auf Papier oder auf eine Folie als Trägermaterial aufgetragen ist. Bei dem Klebstoffartikel kann es sich auch um ein Klebeband handeln, wobei der Klebstoff auf einem bandförmigen Trägermaterial aufgetragen ist. Bei dem Trägermaterial des Klebebandes kann es sich um Gewebe, Vliese, Folien, Papier, Filze, Schaumstoffe und Coextrudate oder Kombinationen davon handeln. Anwendungsgebiete sind trägerlose, einseitige und doppelseitige Klebebänder, medizinische Klebebänder, Verpackungsklebebänder, Kabelwickelbänder, Teppichverlegebänder, Montageklebebänder, Klebebänder zur Fixierung von Dachunterspannbahnen, selbstklebend ausgerüstete Trägermaterialien wie z.B. Schaumstoffe, Bitumenplatten und ähnliches.

Zur Herstellung der Klebstoffartikel kann eine Klebstoffschicht auf das Trägermaterial in üblicher Weise aufgebracht werden, z.B. durch Rollen, Rakeln, Streichen etc. Im Falle der Verwendung einer wässrigen Klebstoffdispersion kann das Wasser durch Trocknung bei z.B. 50 bis 150°C entfernt werden. Die so erhaltenen, beschichteten Substrate werden z.B. als Selbstklebeartikel, wie Etiketten, Klebebänder oder Folien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Gegenstand der Erfindung ist auch ein Klebeband, welches mindestens eine Trägerschicht aufweist und ein- oder beidseitig mit mindestens einer erfindungsgemäßen Haftklebstoffdispersion beschichtet ist. Bevorzugte Trägermaterialien für die Herstellung von Klebebändern sind Polyethylen (PE), orientiertes Polypropylen (oPP), Polyethylenterephtalat (PET), PE-Schaum und Polyurethan-Schaum (PU-Schaum).

Für die Herstellung von Klebebändern ist das auf Feststoffgehalt bezogene Auftragsgewicht der Haftklebstoffdispersion vorzugsweise mindestens 20 g/m$^2$ oder mindestens 30 g/m$^2$, z.B. 60 bis 80 g/m$^2$.

In einer Ausführungsform der Erfindung handelt es sich um ein Klebeband, bei welchem das Material der Trägerschicht ausgewählt ist aus PE, oPP, PET, PE-Schaum oder PU-Schaum und/oder das Klebeband mindestens eine die Klebstoffschicht abdeckende, ablösbare Schutzschicht aufweist.

Bei dem Klebstoffartikel kann es sich um ein Folienetikett oder um eine Klebefolie, insbesondere um eine dekorative Folie oder eine Schutzfolie handeln, wobei der Klebstoff auf einer Polymerfolie als Trägermaterial aufgetragen ist. Die Klebstoffartikel sind dann vorzugsweise selbstklebend und bestehen im Allgemeinen aus einem polymeren Trägermaterial und einer ein- oder beidseitig, vorzugsweise einseitig aufgebrachten Schicht des Klebstoffs. Bei dem Trägermaterial kann es sich z.B. um transparente Polymerfolien handeln. Die transparenten Polymerfolien können z.B. bestehen aus Polyolefinen wie Polyethylen oder Polypropylen, das biaxial oder monoaxial verstreckt sein kann, Polyestern, Polyethylenterephthalat, Polyvinylchlorid, Polystyrol, Polyamid. Insbesondere eignen sich transparente Träger, z.B. aus Polyolefinen, insbesondere Polyethylen oder orientiertem Polypropylen (oPP) oder Polyestern. Die Foliendicke beträgt in der Regel nicht mehr als 0,5 mm, vorzugsweise nicht mehr als 0,3 mm oder nicht mehr als 0,2 mm. Polyethylenfolien können z.B. eine Foliendicke von 70 bis 130 Mikrometer oder von 80 bis 130 Mikrometer aufweisen. Polyethylenterephthalatfolien können z.B. eine Foliendicke von 15 bis 50 Mikrometer oder von 20 bis 40 Mikrometer aufweisen. oPP-Folien können z.B. eine Foliendicke von 40 bis 130 Mikrometer oder von 50 bis 100 Mikrometer aufweisen. Die transparenten Polymerfolien weisen eine Lichttransmission von in der Regel mindestens 85%, vorzugsweise mindestens 88% oder mindestens 90%, messbar z.B. nach ASTM D 1003-07, auf.

Die wässrigen Polymerisatdispersionen haben sehr gute Tackifiereigen-schaften wenn sie in Kombination mit Klebstoffpolymeren eingesetzt werden und erlauben die Herstellung von Klebeartikeln mit sehr guten Klebeeigenschaften, insbesondere hinsichtlich der Kombination von guter Adhäsion und guter Kohäsion.

Beispiele

Einsatzstoffe:

| AS | Acrylsäure |
|---|---|
| MAS | Methacrylsäure |
| AM | Acrylamid |
| MMA | Methylmethacrylat |
| nBA | n-Butylacrylat |
| VAc | Vinylacetat |
| EHTG | (2-Ethylhexyl)-thioglykolat |

Anwendungstechnische Prüfungen:

Die Haftklebstoffdispersionen wurden auf Laufenberg Silikonpapier NSA 1370 aufgetragen, getrocknet und auf Herma-Etikettenpapier (75 g/m$^2$, ungeprimert) transferiert, so dass eine Auftragsmenge von 18 g/m$^2$ des getrockneten Klebstoffs erhalten wurde. Nach einer mindestens 16-stündigen Konditionierung der Laminate unter Normklima (23 °C, 50% relative Luftfeuchte) wurden die Schälfestigkeit (Adhäsion), die Scherfestigkeit (Kohäsion) und der Quickstick bei 23°C bestimmt.

Der mit Haftklebstoff beschichtete Träger wurde in 25 mm breite Prüfstreifen geschnitten.

a) Quickstick

Bei der Bestimmung des Quickstick (Oberflächenklebrigkeit, auch Loop Tack genannt) wird die Kraft bestimmt, die ein auf ein Trägermaterial aufgebrachter Klebstoff durch Verklebung ohne Druck auf ein Substrat bei einer definierten Abzugsgeschwindigkeit dem Abziehen vom Substrat entgegensetzt. Trägermaterial ist Etikettenpapier 75 g/m$^2$, Substrat ist Karton. Aus dem mit Klebstoff beschichteten Träger wird ein Prüfstreifen in 25 mm Breite und 250 mm Länge geschnitten und mindestens 16 Stunden bei Normklima (23°C, 50% rel. Luftfeuchte) gelagert. Die beiden Enden des Prüfstreifens werden auf ca. 1 cm Länge mit der Klebeseite nach innen umgeklappt. Aus dem Klebstreifen wird eine Schlaufe mit der Klebseite nach außen gebildet, die beiden Enden zusammengefasst und in die obere Klemme einer Zugprüfmaschine eingespannt. In die untere Klemme wird die Prüfsubstrathalterung eingespannt und das Prüfsubstrat eingelegt. Die Klebestreifenschlaufe wird durch die Zugprüfmaschine mit einer Geschwindigkeit von 300 mm/Minute nach unten gefahren, sodass die Klebseite des Prüfstreifens mit dem Substrat ohne zusätzlichen Druck verklebt. Die Zugprüfmaschine wird gestoppt und sofort wieder nach oben gefahren, wenn sich die Unterkante der oberen Klemme 40 mm über dem Substrat befindet. Die Angabe des Prüfergebnisses erfolgt in N/25 mm Breite. Es wird der höchste Wert der Anzeige (Fmax) als Maß der Oberflächenklebrigkeit abgelesen. Aus mindestens zwei Einzelergebnissen wird ein Mittelwert gebildet.

b) Scherfestigkeit (Kohäsion)

Zur Bestimmung der Scherfestigkeit wurden die Prüfstreifen mit einer verklebten Fläche von 25 x 25 mm auf Stahlblech geklebt, mit einer 1 kg schweren Rolle 1 mal angerollt und nach 10 Minuten hängend mit einem 1 kg Gewicht belastet. Die Scherfestigkeit (Kohäsion) wurde bei Normklima (23°C; 50% relative Luftfeuchtigkeit) bestimmt. Das Maß für die Scherfestigkeit ist die Zeit in Stunden bis zum Abfallen des Gewichts; es wurde jeweils der Durchschnitt aus mindestens 3 Messungen berechnet.

c) Schälfestigkeit (Adhäsion)

Bei der Bestimmung der Schälfestigkeit (Adhäsion) wurde jeweils ein 25 mm breiter Prüfstreifen auf einen Prüfkörper aus Karton geklebt und mit einer 1 kg schweren Rolle 1-mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfkörper abgezogen und der dazu benötigte Kraftaufwand gemessen. Das Maß für die Schälfestigkeit war die Kraft in N/25 mm, die sich als Durchschnittswert aus mindestens zwei Messungen ergab. Die Schälfestigkeit wurde 1 Minute nach der Verklebung bestimmt. Nach dieser Zeit hat sich die Klebekraft voll ausgebildet. Die Testmethoden entsprechen im Wesentlichen den Finat-Testmethoden (FTM) Nr. 1, Nr. 8 und Nr. 9.

Beispiele

Es wurden wässrige Polymerisatdispersionen durch Emulsionspolymerisation aus den in Tabelle 1 wiedergegebenen Komponenten mit den in Tabelle 1 genannten Eigenschaften hergestellt. Bei der Emulsionspolymerisation wurden außerdem jeweils 1 Gew.-Teil Disponil® FES 77 (Emulgator), 0,2 Gew.-Teile Dowfax® 2A1, 0,4 Gew.-Teile Natriumpersulfat (Initiator), 0,16 Gew.-Teile Acetonbisulfit und 0,1 Gew.-Teile tert.-Butylhydroperoxid eingesetzt. Der Feststoffgehalt lag bei ca. 52-56 Gew.%. Der pH-Wert wurde auf ca. 5-7 eingestellt.
Die Beispiele D1 bis Dx sind erfindungsgemäß, die Beispiele V1 bis Vx sind nichterfindungsgemäße Vergleichsbeispiele.

Tabelle 1: Komponenten zur Herstellung von Polymerisatdispersionen und deren Eigenschaften; Mengenangaben in Gewichtsteilen

|      | V1   | D1   | D2   | D3   | V2   | V3   | D4   |
|------|------|------|------|------|------|------|------|
| AS   | -    | -    | -    | -    | -    | -    | -    |
| MAS  | 1    | 1    | 1    | 1    | 1    | 1    | 1    |
| MMA  | 49,5 | 49,5 | 49,5 | 49,5 | 79,5 | 79,5 | 79,5 |
| nBA  | 49,5 | 49,5 | 49,5 | 49,5 | 19,5 | 19,5 | 19,5 |
| EHTG | 1    | 5    | 10   | 20   | 5    | 10   | 20   |

| Mw | 43400 | 8650 | 3960 | 2100 | 8220 | 4110 | 2110 |
|---|---|---|---|---|---|---|---|
| Tg [°C] | 13 | -3 | -18,4 | -40,4 | 45 | 23,5 | -12,1 |
| Tg nach Fox[1) [°C] | 14 | 14 | 14 | 14 | 63,3 | 63,3 | 63,3 |

[1) Theoretische Glasübergangstemperatur, berechnet mit der Fox-Gleichung

Tabelle 1 (Fortsetzung)

|  | D5 | D6 [1) | V4 | V5 |
|---|---|---|---|---|
| AS | 5 | - | - | - |
| MAS | - | 1 | 1 | 1 |
| MMA | 40 | 9,5 | 9,5 | 9,5 |
| nBA | 55 | 89,5 | 89,5 | 89,5 |
| EHTG | 10 | 1 | 10 | 20 |
| Mw | 4300 | 43100 | 4180 | 2090 |
| Tg [°C] | -24 | -39 | -57 | -67 |
| Tg nach Fox[1) [°C] | 7,6 | -32,9 | -32,9 | -32,9 |

[1) nicht anspruchsgemäß

Tabelle 1 (Fortsetzung)

|  | V7 | D7 | V8 | D8 | V9 | D9 |
|---|---|---|---|---|---|---|
| AS | - | - | - | - | - | - |
| MAS | 1 | 1 | 1 | 1 | 1 | 1 |
| MMA | 39,5 | 39,5 | 29,5 | 29,5 | 19,5 | 19,5 |
| nBA | 59,5 | 59,5 | 69,5 | 69,5 | 79,5 | 79,5 |
| EHTG | 0 | 1 | 0 | 1 | 0 | 1 |
| Mw | 210000 | 37300 | 280000 | 37000 | 242000 | 37300 |
| Tg [°C] | 1 | -2 | -11 | -16 | -24 | -28 |
| Tg nach Fox[1) [°C] | 1 | 1 | -12 | -12 | -23 | -23 |

Tabelle 1 (Fortsetzung)

|  | D10 | D11 | V10 | D12 | D13 | V11 |
|---|---|---|---|---|---|---|
| AS | 5 | 5 | 5 | 5 | 5 | 5 |
| VAc | - | - | - | 10 | 10 | 10 |
| MMA | 45 | 45 | 45 | 35 | 35 | 35 |
| nBA | 50 | 50 | 50 | 50 | 50 | 50 |
| EHTG | 10 | 5 | 1 | 10 | 5 | 1 |
| Mw | 3950 | 7620 | 37100 | 3960 | 7500 | 36000 |
| Tg [°C] | -19 | -3 | 14 | -25 | -18 | 7 |
| Tg nach Fox[1) [°C] | 14 | 14 | 14 | 9 | 9 | 9 |

Tabelle 1 (Fortsetzung)

|  | D14 | D15 | D16 | D17 | D18 | D19 | D20 |
|---|---|---|---|---|---|---|---|

| MAS | 1 | 1 | 1 | 1 | 1 | 1 | 1 |
|---|---|---|---|---|---|---|---|
| HPA 6) | 4 | | | | | | |
| UMA 2) | 1 | 1 | 4 | | | | |
| GMA 3) | | | | 1 | 4 | | |
| DAAM 4) | | | | | | 1 | 4 |
| ADDH 5) | | | | | | 0,5 | 2 |
| MMA | 48 | 48 | 45 | 48 | 45 | 48 | 45 |
| nBA | 50 | 50 | 50 | 50 | 50 | 50 | 50 |
| EHTG | 10 | 10 | 10 | 10 | 10 | 10 | 10 |
| Mw | 4280 | 4260 | 4220 | 4260 | 4320 | 4320 | 4190 |
| Tg [°C] | -23 | -21 | -20 | -21 | -21 | -17 | -19 |
| Tg nach Fox[1) ][°C] | 10 | | | 13,1 | 12,6 | | |

2) UMA = Ureidomethacrylat

3) GMA = Glycidylmethacrylat

4) N-(1,1-Dimethyl-3-oxobutyl)-acrylamid ( Diaceton-acrylamid)

5) Adipinsäuredihydrazid

6) HPA = Hydroxypropylacrylat

Tabelle 1 (Fortsetzung)

| | D21 | D22 | D23 |
|---|---|---|---|
| AS | | | 0,25 |
| MAS | 1 | 0,25 | |
| AM | | 0,5 | 0,5 |
| Styrol | 10 | | |
| MMA | 39 | 20,25 | 45 |
| nBA | 50 | 79 | 54,25 |
| EHTG | 10 | 1 | 10 |
| Mw | 4340 | ca. 40000 | ca 15000 |
| Tg [°C] | -23 | -28 | ca. -15 |
| Tg nach Fox[1) ][°C] | 13,4 | -22 | + 7,5 |

Vergleichsbeispiel V6

Als Vergleichsbeispiel V6 wurde das Handelsprodukt Acronal® A 107 verwendet. Hierbei handelt es sich um ein anionisches Polyacrylat (Copolymer aus nBA und (Meth)acrylsäure).
Tg: -46°C
Gewichtsmittleres Molekulargewicht Mw = 148000 g/mol

Haftklebstoffdispersionen

Es wurden Haftklebstoffdispersionen hergestellt aus jeweils ca. 20 Gew.-Teilen Dispersionen D1 bis D21 bzw. Vergleichsdispersionen V1 bis V11 als Tackifier, ca. 80 Gew.-Teilen Acronal® V 215 als Klebstoffpolymer und 0,5 Gew.-Teilen Lumiten® I-SC (Netzmittel), wobei die Mengenangaben jeweils auf den in den jeweiligen Dispersionen enthaltenen Feststoff bezogen sind.

Die Testergebnisse zu Quickstick, Scherfestigkeit und Schälfestigkeit sind in Tabelle 2 zusammengefasst.

Tabelle 2: Testergebnisse Quickstick, Scherfestigkeit und Schälfestigkeit

| Verwendete | Quickstick Fmax [N/25mm] | Scherfestigkeit [Stunden] | Schälfestigkeit [N/25mm] |
|---|---|---|---|
| V1 | 1,5 | 113 | 6,3 |
| D1 | 3,4 | 63,5 | 10,8 |
| D2 | 3,9 | 49,8 | 8,8 |
| D3 | 6,9 | 20,6 | 8,8 |
| V2 | 0,7 | 40 | 2,7 |
| V3 | 1,0 | > 130 | 2,5 |
| D4 | 4,0 | 84,5 | 6,5 |
| D5 | 4,3 | 33,9 | 10,3 |
| D6 | 5,5 | 15,1 | 13,9 |
| V4 | 5,2 | 6,7 | 10,3 |
| V5 | 3,9 | 6,8 | 9,5 |
| V6 | 4,4 | 3,6 | 9,8 |
| V7 | 2,8 | 96 | 5,0 |
| D7 | 4,0 | 88 | 10,1 |
| V8 | 3,0 | 98 | 6,3 |
| D8 | 5,1 | 42 | 10,3 |
| V9 | 3,5 | 87 | 7,2 |
| D9 | 5,9 | 20 | 14,1 |
| D10 | 5,0 | 30 | 13,8 |
| D11 | 2,9 | 56 | 11 |
| V10 | 0,4 | > 100 | 4,2 |
| D12 | 4,9 | 30 | 12,4 |
| D13 | 4,2 | 50 | 8,9 |
| V11 | 1,4 | > 100 | 5,1 |
| D14 | 4,6 | 20,1 | 14,4 |
| D15 | 5,1 | 30,1 | 12,7 |
| D16 | 4,9 | 54,3 | 15,3 |
| D17 | 5,1 | 29,5 | 11,3 |
| D18 | 4,5 | 31,2 | 13,5 |
| D19 | 4,3 | >120 | 12,5 |
| D20 | 4,3 | >120 | 11,3 |
| D21 | 5,5 | 18 | 14,9 |
| D22 | 5,8 | 26,6 | 17,9 |
| D23 | 5,3 | 15,5 | 19,7 |

Die Ergebnisse zeigen, dass für V1-V3 und für V7-V11 die Quickstick- und Schälfestigkeit-Werte sehr niedrig sind. Für V4, V5 und V6 sind die Scherfestigkeit-Werte sehr niedrig. Gewünscht sind hier Scherfestigkeit-Werte von mindestens 15 Stunden, vorzugsweise mindestens 20 Stunden.

**Patentansprüche**

1. Wässrige Klebstoffdispersion, enthaltend mindestens ein in Wasser dispergiertes Klebstoffpolymer und mindestens ein in Wasser dispergiertes Tackifier-Polymer, wobei das Tackifier-Polymer ein Polymerisat ist mit einem gewichtsmittleren Molekulargewicht von weniger als 50000 und einer Glasübergangstemperatur, gemessen durch Differential Scanning Calorimetrie gemäß ASTM 3418/82 als midpoint temperature bei einer Aufheizrate von 20 K/min, von größer oder gleich -40 °C bis kleiner als 0 °C, herstellbar durch Emulsionspolymerisation in Gegenwart mindestens eines Molekulargewichtsreglers und herstellbar aus einem Monomergemisch enthaltend

   (a) mindestens 40 Gew.% mindestens eines C1- bis C20-Alkyl(meth)acrylats,
   (b) 0 bis 30 Gew.% mindestens eines Vinylaromaten,
   (c) mindestens 0,1 Gew.% und bis 7 Gew.% mindestens eines Säuremonomers,
   (d) 0 bis 50 Gew.% an weiteren Monomeren,

   wobei die Angaben der Monomermengen jeweils auf die Summe aller Monomere bezogen sind, wobei die für eine Polymerisation ohne Molekulargewichtsregler berechnete, theoretische Glasübergangstemperatur des Tackifier-Polymers größer als -25°C ist,
   und wobei der mindestens eine Molekulargewichtsregler eine organische Verbindung ist, die Schwefel in gebundener Form enthält und der Molekulargewichtsregler in einer Menge von mindestens 1 Gewichtsteil auf 100 Gewichtsteile Monomere eingesetzt wird.

2. Dispersion gemäß Anspruch 1, **dadurch gekennzeichnet, dass** das gewichtsmittlere Molekulargewicht des Polymerisats von 1500 bis 45000 beträgt.

3. Dispersion gemäß einem der vorhergehenden Ansprüche, **dadurch gekennzeichnet, dass** die Monomeren (a) in einer Menge von 60 bis 99,9 Gew.% eingesetzt werden und ausgewählt sind aus einem oder mehreren C1- bis C10 Alkyl(meth)acrylaten.

4. Dispersion gemäß einem der vorhergehenden Ansprüche, **dadurch gekennzeichnet, dass** die Monomeren (b) ausgewählt sind aus Vinyltoluol, alpha-Methylstyrol, para-Methylstyrol, alpha-Butylstyrol, 4-n-Butylstyrol, 4-n-Decylstyrol und vorzugsweise Styrol.

5. Dispersion gemäß einem der vorhergehenden Ansprüche, **dadurch gekennzeichnet, dass** die Säuremonomeren (c) in einer Menge von 0,1 bis 7 Gew.% eingesetzt werden und ausgewählt sind aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidomethylpropansulfonsäure, Sulfopropylacrylat und Sulfopropylmethacrylat und Mischungen dieser Monomere.

6. Dispersion gemäß einem der vorhergehenden Ansprüche, **dadurch gekennzeichnet, dass** die weiteren Monomeren (d) in einer Menge von 0,1 bis 40 Gew.% eingesetzt werden und ausgewählt sind aus C1 bis C20 Hydroxyalkyl(meth)acrylaten, Vinylestern von bis zu 20 C-Atome enthaltenden Carbonsäuren, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, (Meth)acrylamid oder Mischungen dieser Monomere.

7. Dispersion gemäß einem der vorhergehenden Ansprüche, **dadurch gekennzeichnet, dass** das Polymerisat herstellbar ist aus einem Monomergemisch, enthaltend

   (a) 60 bis 99,7 Gew.% mindestens eines C1- bis C10 Alkyl(meth)acrylats,
   (b) 0 bis 30 Gew.% Styrol
   (c) 0,2 bis 7 Gew.% mindestens eines Säuremonomers, ausgewählt aus Acrylsäure und Methacrylsäure,
   (d) 0,1 bis 30 Gew.% an weiteren Monomeren, ausgewählt aus C1- bis C10-Hydroxyalkyl(meth)acrylaten und Vinylacetat,

wobei die Angaben der Monomermengen jeweils auf die Summe aller Monomere bezogen sind.

8. Dispersion gemäß einem der vorhergehenden Ansprüche, **dadurch gekennzeichnet, dass** der Molekulargewichtsregler ausgewählt ist aus der Gruppe bestehend aus tert.-Dodecylmercaptan, n-Dodecylmercaptan und (2-Ethylhexyl)-thioglykolat.

9. Dispersion gemäß einem der vorhergehenden Ansprüche, **dadurch gekennzeichnet, dass** das Klebstoffpolymer in Mengen von 60 bis 95 Gew.% und das niedrigmolekulare Polymerisat in Mengen von 5 bis 40 Gew.% enthalten ist, wobei die Mengenangaben jeweils bezogen sind auf Feststoffgehalt.

10. Dispersion gemäß einem der vorhergehenden Ansprüche, **dadurch gekennzeichnet, dass** die Glasübergangstemperatur des Polymerisats größer ist als die Glasübergangstemperatur des Klebstoffpolymers, wobei die Glasübergangstemperaturen gemessen werden durch Differential Scanning Calorimetrie gemäß ASTM 3418/82 als midpoint temperature bei einer Aufheizrate von 20 K/min.

11. Dispersion gemäß einem der Ansprüche 1 bis 9, **dadurch gekennzeichnet, dass** das niedrigmolekulare Polymerisat durch eine Stufenfahrweise in situ in Gegenwart des Klebstoffpolymers hergestellt wird.

12. Verfahren zur Herstellung der Klebstoffpolymer enthaltenden Dispersion gemäß einem der Ansprüche 1 bis 11, **dadurch gekennzeichnet, dass** entweder eine kein Klebstoffpolymer enthaltende wässrige Dispersion des Tackifier-Polymers mit einer ein Klebstoffpolymer enthaltenden wässrigen Dispersion gemischt wird oder dass das Tackifier-Polymer Gegenwart eines in Wasser dispergierten Klebstoffpolymers hergestellt wird.

13. Verwendung der wässrigen Dispersion nach einem der Ansprüche 1 bis 11 zur Herstellung von Klebeetiketten, Klebefolien oder Klebebändern.

14. Selbstklebender Artikel, erhältlich durch Beschichten eines Trägermaterials mit einer Klebstoffpolymer enthaltenden Dispersion gemäß einem der Ansprüche 1 bis 11.

15. Verwendung der wässrigen Dispersion nach einem der Ansprüche 1 bis 11 für Fußbodenklebstoffe.

**Claims**

1. An aqueous adhesive dispersion comprising at least one adhesive polymer dispersed in water and at least one tackifier polymer dispersed in water, where the tackifier polymer is a polymer having a weight-average molecular weight of less than 50 000 and a glass transition temperature, measured by Differential Scanning Calorimetry according to ASTM 3418/82 as midpoint temperature at a heating rate of 20 K/min, of greater than or equal to -40°C to less than 0°C, preparable by emulsion polymerization in the presence of at least one chain transfer agent and preparable from a monomer mixture comprising

   (a) at least 40% by weight of at least one C1 to C20 alkyl (meth)acrylate,
   (b) 0% to 30% by weight of at least one vinylaromatic,
   (c) at least 0.1% by weight and up to 7% by weight of at least one acid monomer,
   (d) 0% to 50% by weight of further monomers,

   the figures for the monomer amounts being based in each case on the sum of all the monomers, where the theoretical glass transition temperature of the tackifier polymer, calculated for a polymerization without chain transfer agent, is greater than -25°C, and where the at least one chain transfer agent is an organic compound which comprises sulfur in bound form and the chain transfer agent is used in an amount of at least 1 part by weight per 100 parts by weight of monomers.

2. The dispersion according to claim 1, wherein the weight-average molecular weight of the polymer is from 1500 to 45 000.

3. The dispersion according to either of the preceding claims, wherein the monomers (a) are used in an amount of 60% to 99.9% by weight and are selected from one or more C1 to C10 alkyl (meth)acrylates.

4. The dispersion according to any of the preceding claims, wherein the monomers (b) are selected from vinyltoluene, alpha-methylstyrene, para-methylstyrene, alpha-butylstyrene, 4-n-butylstyrene, 4-n-decylstyrene, and - preferably - styrene.

5. The dispersion according to any of the preceding claims, wherein the acid monomers (c) are used in an amount of 0.1% to 7% by weight and are selected from acrylic acid, methacrylic acid, itaconic acid, maleic acid, fumaric acid, crotonic acid, vinylacetic acid, vinyllactic acid, vinylsulfonic acid, styrenesulfonic acid, acrylamidomethylpropanesulfonic acid, sulfopropyl acrylate, and sulfopropyl methacrylate, and mixtures of these monomers.

6. The dispersion according to any of the preceding claims, wherein the further monomers (d) are used in an amount of 0.1% to 40% by weight and are selected from C1 to C20 hydroxyalkyl (meth)acrylates, vinyl esters of carboxylic acids comprising up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, (meth)acrylamide, or mixtures of these monomers.

7. The dispersion according to any of the preceding claims, wherein the polymer is preparable from a monomer mixture comprising

   (a) 60% to 99.7% by weight of at least one C1 to C10 alkyl (meth)acrylate,
   (b) 0% to 30% by weight of styrene,
   (c) 0.2% to 7% by weight of at least one acid monomer selected from acrylic acid and methacrylic acid,
   (d) 0.1% to 30% by weight of further monomers selected from C1 to C10 hydroxyalkyl (meth)acrylates and vinyl acetate,

   the figures for the monomer amounts being based in each case on the sum of all the monomers.

8. The dispersion according to any of the preceding claims, wherein the chain transfer agent is selected from the group consisting of tert-dodecyl mercaptan, n-dodecyl mercaptan, and 2-ethylhexyl thioglycolate.

9. The dispersion according to any of the preceding claims, wherein the adhesive polymer is present in amounts of 60% to 95% by weight and the low molecular weight polymer is present in amounts of 5% to 40% by weight, the amounts figures being based in each case on solids content.

10. The dispersion according to any of the preceding claims, wherein the glass transition temperature of the polymer is greater than the glass transition temperature of the adhesive polymer, where the glass transition temperatures are measured by Differential Scanning Calorimetry according to ASTM 3418/82 as midpoint temperature at a heating rate of 20 K/min.

11. The dispersion according to any of claims 1 to 9, wherein the low molecular weight polymer is prepared in situ by a staged procedure in the presence of the adhesive polymer.

12. A method for producing the adhesive polymer-comprising dispersion according to any of claims 1 to 11, which either comprises mixing an aqueous dispersion of the tackifier polymer not comprising adhesive polymer with an aqueous dispersion comprising an adhesive polymer, or comprises preparing the tackifier polymer in the presence of an adhesive polymer dispersed in water.

13. The use of the aqueous dispersion according to any of claims 1 to 11 for producing adhesive labels, adhesive sheets or adhesive tapes.

14. A self-adhesive article obtainable by coating a carrier material with an adhesive polymer-comprising dispersion according to any of claims 1 to 11.

15. The use of the aqueous dispersion according to any of claims 1 to 11 for floor adhesives.

**Revendications**

1. Dispersion aqueuse d'adhésif, contenant au moins un polymère adhésif dispersé dans de l'eau et au moins un polymère collant dispersé dans de l'eau, le polymère collant étant un polymère ayant un poids moléculaire moyen en poids de moins de 50 000 et une température de transition vitreuse, mesurée par calorimétrie différentielle à balayage selon ASTM 3418/82 en tant que température médiane à un taux de chauffage de 20 K/minute, de -40 °C ou plus à moins de 0 °C, pouvant être fabriqué par polymérisation en émulsion en présence d'au moins un régulateur du poids moléculaire, et pouvant être fabriqué à partir d'un mélange de monomères contenant :

(a) au moins 40 % en poids d'au moins un (méth)acrylate d'alkyle en C1 à C20,
(b) 0 à 30 % en poids d'au moins un composé aromatique de vinyle,
(c) au moins 0,1 % en poids à 7 % en poids d'au moins un monomère acide,
(d) 0 à 50 % en poids de monomères supplémentaires,

les indications des quantités de monomères se rapportant à chaque fois à la somme de tous les monomères, la température de transition vitreuse théorique du polymère collant, calculée pour une polymérisation sans régulateur du poids moléculaire, étant supérieure à -25 °C,
et ledit au moins un régulateur du poids moléculaire étant un composé organique qui contient du soufre sous forme reliée, et le régulateur du poids moléculaire étant utilisé en une quantité d'au moins 1 partie en poids pour 100 parties en poids de monomères.

2. Dispersion selon la revendication 1, **caractérisée en ce que** le poids moléculaire moyen en poids du polymère est de 1 500 à 45 000.

3. Dispersion selon l'une quelconque des revendications précédentes, **caractérisée en ce que** les monomères (a) sont utilisés en une quantité de 60 à 99,9 % en poids, et sont choisis parmi un ou plusieurs (méth)acrylates d'alkyle en C1 à C10.

4. Dispersion selon l'une quelconque des revendications précédentes, **caractérisée en ce que** les monomères (b) sont choisis parmi le vinyltoluène, l'alpha-méthylstyrène, le para-méthylstyrène, l'alpha-butylstyrène, le 4-n-butylstyrène, le 4-n-décylstyrène, et de préférence le styrène.

5. Dispersion selon l'une quelconque des revendications précédentes, **caractérisée en ce que** les monomères acides (c) sont utilisés en une quantité de 0,1 à 7 % en poids, et sont choisis parmi l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrène-sulfonique, l'acide acrylamidométhylpropanesulfonique, l'acrylate de sulfopropyle et le méthacrylate de sulfopropyle, et les mélanges de ces monomères.

6. Dispersion selon l'une quelconque des revendications précédentes, **caractérisée en ce que** les monomères supplémentaires (d) sont utilisés en une quantité de 0,1 à 40 % en poids, et sont choisis parmi les (méth)acrylates d'hydroxyalkyle en C1 à C20, les esters de vinyle d'acides carboxyliques contenant jusqu'à 20 atomes C, les nitriles éthyléniquement insaturés, les halogénures de vinyle, les éthers de vinyle d'alcools contenant 1 à 10 atomes C, les hydrocarbures aliphatiques contenant 2 à 8 atomes C et une ou deux doubles liaisons, le (méth)acrylamide ou les mélanges de ces monomères.

7. Dispersion selon l'une quelconque des revendications précédentes, **caractérisée en ce que** le polymère peut être fabriqué à partir d'un mélange de monomères, contenant :

(a) 60 à 99,7 % en poids d'au moins un (méth)acrylate d'alkyle en C1 à C10,
(b) 0 à 30 % en poids de styrène,
(c) 0,2 à 7 % en poids d'au moins un monomère acide, choisi parmi l'acide acrylique et l'acide méthacrylique,
(d) 0,1 à 30 % en poids de monomères supplémentaires, choisis parmi les (méth)acrylates d'hydroxyalkyle en C1 à C10 et l'acétate de vinyle,

les indications des quantités de monomères se rapportant à chaque fois à la somme de tous les monomères.

8. Dispersion selon l'une quelconque des revendications précédentes, **caractérisée en ce que** le régulateur du poids moléculaire est choisi dans le groupe constitué par le tert.-dodécylmercaptan, le n-dodécylmercaptan et le thioglycolate de 2-éthylhexyle.

9. Dispersion selon l'une quelconque des revendications précédentes, **caractérisée en ce que** le polymère adhésif est contenu en quantités de 60 à 95 % en poids, et le polymère de faible poids moléculaire est contenu en quantités de 5 à 40 % en poids, les indications de quantités se rapportant à chaque fois à la teneur en solides.

10. Dispersion selon l'une quelconque des revendications précédentes, **caractérisée en ce que** la température de transition vitreuse du polymère est supérieure à la température de transition vitreuse du polymère adhésif, les températures de transition vitreuse étant mesurées par calorimétrie différentielle à balayage selon ASTM 3418/82 en tant que température médiane à un taux de chauffage de 20 K/minute.

11. Dispersion selon l'une quelconque des revendications 1 à 9, **caractérisée en ce que** le polymère de faible poids moléculaire est fabriqué par un procédé graduel in situ en présence du polymère adhésif.

12. Procédé de fabrication de la dispersion contenant un polymère adhésif selon l'une quelconque des revendications 1 à 11, **caractérisé en ce qu'**une dispersion aqueuse du polymère collant ne contenant pas de polymère adhésif est mélangée avec une dispersion aqueuse contenant un polymère adhésif, ou **en ce que** le polymère collant est fabriqué en présence d'un polymère adhésif dispersé dans de l'eau.

13. Utilisation de la dispersion aqueuse selon l'une quelconque des revendications 1 à 11 pour la fabrication d'étiquettes adhésives, de films adhésifs ou de bandes adhésives.

14. Article auto-adhésif, pouvant être obtenu par revêtement d'un matériau support avec une dispersion contenant un polymère adhésif selon l'une quelconque des revendications 1 à 11.

15. Utilisation de la dispersion aqueuse selon l'une quelconque des revendications 1 à 11 pour des adhésifs de plancher.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005047342 A
- US 2002055587 A1
- EP 1829947 A
- JP S63241084 A

**In der Beschreibung aufgeführte Nicht-Patentliteratur**

- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Makromolekulare Stoffe. Houben-Weyl, Methoden der organischen Chemie. Georg-Thieme-Verlag, 1961, vol. XIV/1, 411-420
- **W. MÄCHTLE.** *Makromolekulare Chemie,* 1984, vol. 185, 1025-1039